Europäisches Patentamt

(19) European Patent Office

Office européen des brevets

(11) Numéro de publication: **0 125 171**
**B1**

(12) **FASCICULE DE BREVET EUROPÉEN**

(45) Date de publication du fascicule du brevet:
02.09.87

(51) Int. Cl.⁴: **G 01 N 21/67**

(21) Numéro de dépôt: **84400863.1**

(22) Date de dépôt: **27.04.84**

(54) **Procédé et appareil pour la détermination par spectrométrie d'émission optique des concentrations d'un élément, tel que l'aluminium présent à l'état dissous et précipité dans un métal, notamment l'acier.**

(30) Priorité: **04.05.83 FR 8307463**

(43) Date de publication de la demande:
**14.11.84 Bulletin 84/46**

(45) Mention de la délivrance du brevet:
**02.09.87 Bulletin 87/36**

(84) Etats contractants désignés:
**AT BE CH DE GB IT LI LU NL SE**

(56) Documents cité:
**EP-A-0 101 364**
**BE-A-885 642**
**US-A-4 111 556**

**CHEMICAL ABSTRACTS, vol. 92, 1980, page 699, no. 208409x, Columbus, Ohio, US; A.A. NIZOVTSEVA: "Determination of silicon in steels and cast irons and of aluminum in steels using the 'Spektr' SL-12 styloscope"**

(73) Titulaire: **INSTITUT DE RECHERCHES DE LA SIDERURGIE FRANCAISE (IRSID), 185, rue du Président Roosevelt, F-78105 Saint Germain- en- Laye Cédex (FR)**

(72) Inventeur: **Witmann, André, 4, place du Général de Gaulle, F-57000 Metz (FR)**
Inventeur: **Willay, Gérard, Route d'Ars Jussy, F-57130 Ars- sur- Moselle (FR)**

(74) Mandataire: **Ventavoli, Roger, INSTITUT DE RECHERCHES DE LA SIDERURGIE FRANCAISE (IRSID) Station d'Essais Boîte Postale 13, F-57210 Maizieres- lès- Metz (FR)**

## Description

La présente invention concerne un procédé de détermination des concentrations dissoute et précipitée d'un élément, tel que l'aluminium, dans un échantillon métallique d'analyse par Spectrométrie d'Emission Optique, notamment un échantillon d'acier, procédé selon lequel:

- on soumet l'échantillon à des conditions d'étincelage douces durant toute la durée de l'analyse de manière à éviter tout phénomène de refusion locale de l'échantillon,
- on partage le profil d'étincelage dans le temps, ainsi obtenu pour l'élément à analyser, en au moins deux parties successives: une partie initiale formée d'un pic et une partie terminale formée d'un palier horizontal,
- on considère des valeurs normalisées des intensités du profil d'étincelage,
- on détermine lesdites concentrations à partir desdites valeurs normalisées par lecture sur des abaques d'étalonnage préétablis sur des échantillons connus.

Le brevet FR-A-2 531 531 ayant une priorité du 03.08.82 et publié le 10.02.84 au nom du Demandeur décrit un tel procédé. Selon ce procédé, on considère des valeurs normalisées de l'intensité respectivement du profil d'étincelage complet et du palier horizontal de ce profil, et on détermine à partir de ces valeurs et par lecture sur les abaques d'étalonnage correspondants les concentrations respectivement totale et à l'état dissous oe l'élément analysé. La concentration à l'état précipité s'obtient d'une façon indirecte à partir de la concentration totale, selon une formule de calcul faisant intervenir les valeurs normalisées de l'intensité de différentes séquences du profil d'étincelage.

Ce procédé connu a pu donner satisfaction pour l'analyse des concentrations d'aluminium dans des aciers de nuance courante. Mais en affinant son étude, le Demandeur a pu constater que pour de fortes concentrations d'aluminium précipité, les résultats donnés par le procédé connu montraient certains écarts avec les résultats de l'analyse chimique.

Il apparaissait notamment que la concentration en élément dissoue pouvait parfois être surévaluée. Les inconvéniente de cette surévaluation étaient déjà soupçonnée et pris en compte dans le procédé connu qui utilise, pour le calcul de le concentration en élément précipité, une formule de calcul ne faisant pas appel directement à la concentration totale et à le concentration à l'état dissous.

Le présente invention vise à proposer un nouveau procédé conduisant d'une façon sûre et plus simple que le procédé prémentionné à des résultats fiables même pour les fortes concentrations en élément précipité à analyser.

Ce but est atteint selon l'invention par un procédé du type mentionné en tête de ce mémoire, selon lequel:

- on soumet l'échantillon à des conditions d'étincelage suffisamment douces pour ne pas arracher les inclusions sous-cutanées de l'élément M à analyser,
- on considère une valeur normalisée $V_1$ de l'intensité du pic du profil d'étincelage et une valeur normalisée $V_2$ de l'intensité du palier horizontel du profil d'étincelage,
- on détermine à partir de $V_1 - V_2$ et d'un abaque d'étalonnage correspondant la concentration $[M]_p$ à l'état précipité, de l'élément à analyser,
- on détermine à partir de $V_2$ et d'un abaque d'étalonnage correspondant la concentration à l'état dissous $[M]_d$ de l'élément à analyser,
- on détermine la concentration totale $[M]_t$ par la somme des concentrations à l'état dissous et à l'état précipité $[M]_d + [M]_p$.

En effet, en recherchant les causes de le surévaluation précédemment mentionnée de la concentration à l'état dissous, le Demandeur a découvert que les conditions douces d'étincelage obtenues par l'utilisation d'un générateur d'étincelage doté d'une capacité d'environ 5 μ F, étaient encore trop fortes et pouvaient entraîner l'arrachement d'inclusions sous-cutanées, qui modifiaient l'interprétation du profil d'étincelage.

Par des expériences, le Demandeur a pu montrer qu'il convient, pour n'intéresser que la zone superficielle de l'échantillon analysé et non les couches sous-jacentes, d'abaisser encore le capacité du générateur d'étincelage en dessous de 4 μ F, et de préférence à 3 μ F, valeur qui réalise le but recherché sans toutefoie hypothéquer la sensibilité de la méthode.

Du fait que sous ces conditions ultra-douces d'étincelage, les différentes parties du profil d'étincelage correspondent à des mesures rigoureusement identifiables il devient alors possible d'exploiter directement les intensités lues sur ce profil pour la détermination des concentrations d'élément dissous et précipité.

En effet, toutes les inclusions de surface ayant disparues pendant la première période de l'analyse, correspondant au pic et à la partie intermédiaire du profil d'étincelage précédant le palier horizontal, l'intensité normalisée dudit palier correspond strictement à la concentration d'élément dissous, sans aucune perturbation venant des couches inférieures.

De même, le pic du profil d'étincelage correspond strictement à la superposition de l'intensité due à l'élément précipité et à l'élément dissous. Aussi la différence de ces intensités permet-elle par lecture d'un abaque d'étalonnage de déterminer exactement la teneur en élément précipité. Le bonne réalisation de conditions d'étincelage suffisamment douces pour n'intéresser que les inclusions proches de le surface trouve sa confirmation dans le fait que ladite différence d'intensité significative de la concentretion en élément précipité n'est pas affectée par la structure métallographique de l'échantillon (par exemple type Bombe, Spemis, ou LUS) contrairement à l'intensité du palier significative de la concentration en élément dissous.

Les valeurs des concentrations à l'état dissous, et à l'état précipité étant sûres, il est possible d'obtenir par une simple addition de ces valeurs celle de la concentration totale.

Avantageusement, les valeurs normalisées sont les moyennes arithmétiques des intensités constitutives des différentes parties considérées du profil d'étincelage.

Avantageusement, on partage le profil d'étincelage en trois parties successives: le pic initial, le palier final et une partie intermédiaire correspondant à la transition entre la fin du pic et le début du palier.

Avantageusement, les trois parties du profil d'étincelage sont définies par les intervalles de temps respectifs d'environ 0-10 secondes, 10-30 secondes et au-delà de 30 secondes jusqu'à la fin de la période d'analyse.

Avantageusement, le durée de l'analyse est d'environ 40 secondes.

L'invention concerne également un appareil pour la mise en oeuvre du procédé. Dans un tel appareil, comportant comme connu par ledit brevet français 2 531 531, un générateur d'étincelage équipé d'un condensateur électrique de faible capacité et un circuit de détection de la raie de l'élément à analyser relié à un ensemble de mesure et de traitement, la capacité du condensateur est inférieure à $4\,\mu F$, et de préférence sensiblement égale à $3\,\mu F$.

L'invention sera mieux comprise au vu de la description suivante se référant à la planche unique donnant une représentation schématique et fonctionnelle d'un mode de réalisation d'un appareil de spectrométrie d'émission optique selon l'invention.

L'appareil se compose d'un ensemble d'analyse 1, ou spectromètre proprement-dit, et d'un ensemble 2 de mesure et de traitement du signal fourni par le spectromètre 1.

Ce dernier se compose: d'un générateur d'excitation 3 établissant un arc électrique à une fréquence donnée, par exemple 100 Hz (fréquence industrielle redressée), arc qui s'établit entre un échantillon surfacé 4 à analyser et une contre-électrode 5 placée à faible distance, cet arc étant produit per décharge sous quelques centaines de volts (par exemple entre 300 et 500 volts selon la distance séparant l'échantillon de le contre-électrode 5) d'un condensateur à capacité très faible d'environ $3\,\mu F$; d'une optique composée d'une lentille convergente 6, dont le foyer-objet est sur l'arc et d'une fente 7 qui recueille l'émission d'arc et envoie un pinceau lumineux 8 sur un réseau de diffraction 9 qui émet le spectre de reies relatif à l'ensemble des constituants de l'échantillon 4. Différentes fenêtres de scrutation 10 sont placées en regard du réseau 9 sur un cercle C (dit de ROWLAND) qui passe par ce réseau et par le centre de la fente 7. Chaque fenêtre reçoit ainsi, et transmet à un miroir 11, un rayonnement lumineux à une longueur d'onde donnée, représentative d'un élément à analyser dans l'échantillon. Dans l'exemple considéré, on a représenté trois fenêtres 10 seulement et on admettra que celle la plus proche de l'optique 6, 7 sur le figure reçoit le rayonnement relatif à la raie de l'aluminium (= 396,1 nm), ce dernier étant choisi ici comme élément à analyser. Des photomulipliceteurs 12, placés eu voisinege des miroirs 11, chargent des intégrateurs 13 selon un régime pulsatoire de 100 charges élémentaires par seconde correspondant à la fréquence d'étincelage de 100 Hz. Les intégrateurs 13 sont pilotés par une unité 14 selon un cycle "charge-décharge" déterminé, très bref, correspondant à la période de l'étincelage, soit, dans le cas présent, à un cycle maximum d'1/100e de seconde avec un temps de décharge très rapide afin de remettre l'intégrateur 13 à charge nulle avant l'arrivée de le charge élémentaire suivante.

A cet effet, on pourra avantageusement utiliser des micro-condensateurs de très faible capacité, de l'ordre de 100 pF, ce qui s'avère généralement suffisant pour emmaganiser le charge électrique élémentaire des étincelles les plus intenses et délivrer ainsi, à l'ensemble de mesure et de traitement 2 un signal électrique discriminé sous forme d'un train continu de pulses à la fréquence de 100 pulses par seconde, pendant toute la durée de l'analyse.

L'ensemble de mesure et de traitement 2 se compose d'une unité 15 pour la mesure de la charge instantanée du micro-condensateur 13 et par une chaîne de traitement en aval de l'unité 15, comprenant dans le sens chronologique du traitement:

- une unité de stockage et de classement 16, pilotée par une horloge 17 synchronisée sur l'unité 14, pour ranger en file les signaux élémentaires représentatifs des intensités de chaque pulse, et dont la lecture si on la visualisait sur un écran tel que 18, laisserait apparaître le profil d'étincelage avec son pic initial 19 dont l'intensité normalisée est $V_1$ et son palier final 10, dont l'intensité normalisée est $V_2$,

- une unité 21 pour la segmentation du profil d'étincelage en au moins deux parties, à savoir précisément le pic initial 19 entre 0 et 10 secondes et le palier final 20 entre 30 et 40 secondes,

- une unité 22 de calcul des valeurs normalisées par exemple les moyennes arithmétiques des intensités des pulses formant le pic ($V_1$) et le palier ($V_2$), et la différence $V_1$-$V_2$,

- une unité 23 de comparaison et de calcul des concentrations en aluminium total, dissous et précipité. Cette unité reçoit d'une part les valeurs $V_1$-$V_2$ et $V_2$ calculées dans l'unité 22, et d'autre part, les couples de valeurs "($V^i_1$-$V^i_2$) / $[AL]\,^i_p$" et "$V^i_2$ / $[AL]\,^i_d$" constitutives des abaques d'étalonnages préétablis sur des échantillons connus.

Par comparaison respective de $V_2$ avec "$V^i_2$ / $[AL]\,^i_d$" et de $V^i_1$-$V^i_2$ avec ($V^i_1$ - $V^i_2$ / $[AL]\,^i_p$", l'unité 23 détermine les concentrations $[AL]\,_d$ et $[AL]_p$. Puis, par addition de $[AL]\,_d$ et $[AL]\,_p$, l'unité calcule $[AL]\,_t$. Les résultats sont recueillis sur l'efficheur (ou enregistreur) 24.

Le choix de la moyenne arithmétique comme valeur représentative des intensités du profil de flambage n'est qu'un exemple commode de valeur normalisée pour ces intensités, un choix de cette nature demeurant bien entendu nécessaire, tant pour le comparaison avec les abaques d'étalonnage, que pour les besoins propres du calcul qui fait intervenir des différences entre ces intensités.

De même encore, le mise en oeuvre de l'invention peut s'opérer autrement que per la méthode des pulses décrites ci-avant (discrimination du signal d'étincelage). En effet, une variante opératoire, dite "par intégration" peut consister à recueillir l'intégrale du signal d'émission SEO (spectrométrie d'émission optique) à l'aide de points de mesure pris aux extrémités des parties différenciées (pic et palier) qui caractérisent le profil de flambage.

On comprend qu'une variante de ce type peut être mise en oeuvre dans la mesure où l'on a une connaissance "à priori" des périodes qui déterminent ces différentes parties.

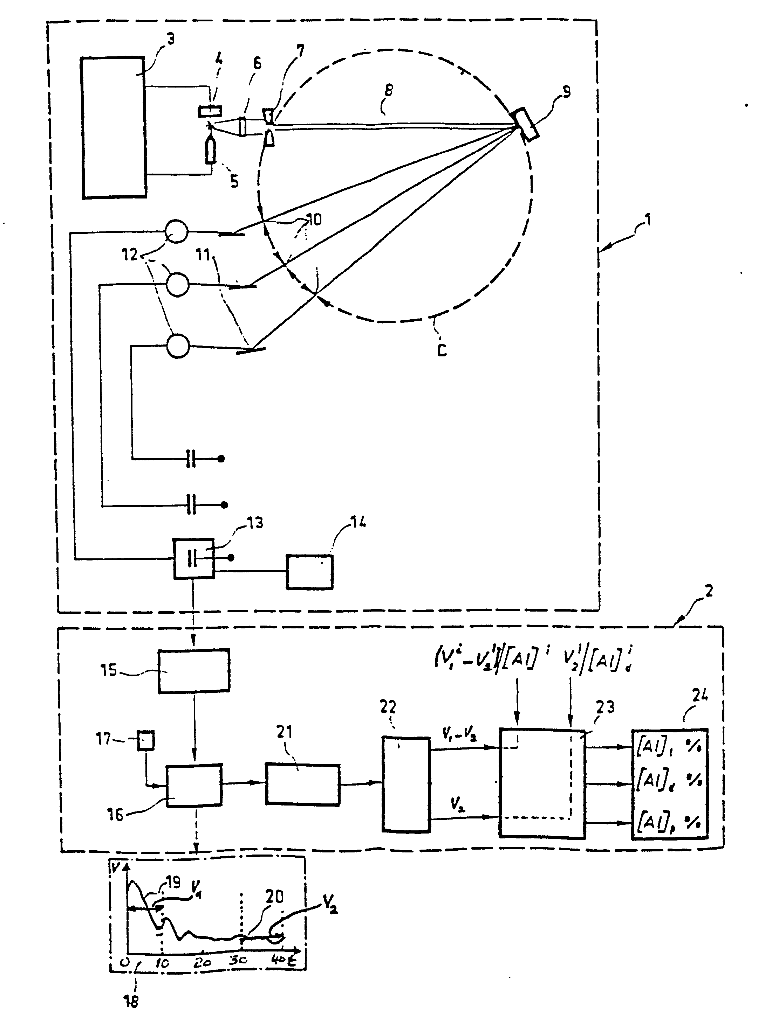

Si tel est le cas, l'appareillage peut alors être relativement simplifié par rapport à celui représenté sur la figure 1, puisque l'on peut alors supprimer l'unité de segmentation 16, ainsi que l'unité de pilotage 14 et remplacer, d'une part, les micro-capacités 13 par des condensateurs de capacité habituelle dans les spectromètres d'émission optique, et, d'autre part, l'appareil 15 par un voltmètre temporisé. Ce voltmètre mesure la tension aux bornes du condensateur par lecture "au vol", au bout d'une période de 10 secondes par exemple, (fin du pic) puis de 30 secondes (fin de la période de transition pic-palier), puis de 40 secondes (fin du palier et fin de l'analyse).

Bien entendu, dans ce ces, les abaques d'étalonage doivent être préétablis sur la base d'intensités SEO intégrées sur des périodes identiques, et les valeurs normalisées des intensités SEO à prendre en compte pour les calculs peuvent alors être avantageusement les valeurs intégrales du signal sur lesdites périodes.

De même, on aura compris qu'entre les deux variantes extrêmes qui sont, d'un côté la méthode dite des "pulses" basée sur un cycle de "charge-décharge" de microcapacités 13 très bref, de l'ordre de 1/100e de seconde et, de l'autre côté, la méthode dite "par intégration" selon laquelle le signal SEO est pris en compte seulement aux extrémités des parties caractéristiques du profil, l'invention trouve un large domaine de mise en oeuvre possible.

**Revendications**

1. Procédé pour le détermination des concentrations dissoute et précipitée d'un élément, tel que l'aluminium, dans un échantillon métallique d'analyse par Spectrométrie d'Emission Optique, notamment un échantillon d'acier, procédé selon lequel:

- on soumet l'échantillon à des conditions d'étincelage douces durant toute la durée de l'analyse de manière à éviter tout phénomène de refusion locale de l'échantillon, et suffisamment douces pour ne pas arracher les inclusions sous-cutanées de l'élément précipité,

- on partage le profil d'étincelage dans le temps, ainsi obtenu pour l'élément à analyser, en au moins deux parties successives: une partie initiale formée d'un pic (19) et une partie terminale formée d'un palier horizontal (20),

- on considère des valeurs normalisées des intensités du profil d'étincelage,

- on détermine lesdites concentrations à partir desdites valeurs normalisées par lecture sur des abaques d'étalonnage préétablis sur des échantillons connus,

- on considère une valeur normalisée $V_1$ de l'intensité du pic (19) du profil d'étincelage et une valeur $V_2$ de l'intensité du palier horizontal (20) du profil d'étincelage,

- on détermine à partir de $V_1$-$V_2$ et d'un abaque d'étalonnage correspondant la concentration $[M]_p$ à l'état précipité, de l'élément M à analyser,

- on détermine à partir de $V_2$ et d'un abaque d'étalonnage correspondant la concentration à l'état dissous $[M]_d$ de l'élément à analyser,

- on détermine la concentration totale $[M]_t$ de l'élément à analyser par la somme des concentrations à l'état dissous et à l'état précipité $]M]_d + [M]_p$.

2. Procédé selon la revendication 1, caractérisé en ce que les valeurs normalisées sont les moyennes arithmétiques des intensités constitutives des différentes parties considérées du profil d'étincelage.

3. Procédé selon l'une quelconque des revendications 1 ou 2, caractérisé en ce que l'on partage le profil d'étincelage en trois parties successives: le pic initial (19), le palier final (20), et une partie intermédiaire correspondant à la transition entre la fin du pic et le début du palier.

4. Procédé selon la revendication 3, caractérisé en ce que les trois parties du profil d'étincelage sont définies par les intervalles de temps respectifs d'environ 0-10 secondes, 10-30 secondes et au-delà de 30 secondes jusqu'à la fin de la période d'analyse.

5. Procédé selon l'une quelconque des revendications précédentes, caractérisé en ce que le durée de l'analyse est d'environ 40 secondes.

6. Procédé selon l'une quelconque des revendications précédentes, caractérisé en ce que dans le but de réaliser des conditions d'excitation suffisamment douces, on utilise un générateur d'étincelage (3) équipé d'un condensateur électrique d'une capacité très faible inférieure à 4 $\mu$ F, et de préférence sensiblement égale à 3 $\mu$ F.

7. Appareil de Spectrométrie d'Emission Optique spécialement conçu pour la mise en oeuvre du procédé selon l'une quelconque des revendications précédentes, du type comportent un généreteur d'étincelage (3) équipé d'un condensateur électrique de faible capacité, et un circuit de détection (6-14) de la raie de l'élément à analyser relié à un ensemble (2) de mesure et de traitement, le capacité dudit condensateur étant inférieure à 4 μ F, et de préférence sensiblement égale à 3 μ F.

## Patentansprüche

1. Verfahren zur Bestimmung der gelösten und niedergeschlagenen Konzentrationen eines Elements, wie z. B. Aluminium, in einer metallischen Analysenprobe mittels optischer Emissionsspektrometrie, und insbesondere in einer Stahlprobe, bei dem
- die Probe einem schwachen Funkenerosionsverfahren während der gesamten Analysedauer derart unterworfen wird, daß jegliches stellenweises Umschmelzen der Probe verhindert wird und das ausreichend schwach ist, um keine subkutanen Einschlüsse des niedergeschlagenen Metalls herauszuschlagen,
- das Funkenerosionsprofil für das zu analysierende Element zeitlich in wenigstens zwei aufeinanderfolgende Abschnitte unterteilt wird: ein Anfangsabschnitt, der durch eine Signalspitze (19) gebildet wird und ein Endabschnitt, der durch einen waagrechten Absatz (20) gebildet wird,
- die normalisierten Werte der Intensitäten des Funkenerosionsprofils berücksichtigt werden,
- diese Konzentrationen bestimmt werden ausgehend von den normalisierten Werten mittels Ablesen von Eichkurven, die für bekannte Proben erstellt wurden,
- ein normalisierter Wert $V_1$ der Intensität der Signalspitze (19) des Funkenerosionsprofils und ein Wert $V_2$ der Intensität des waagrechten Absatzes (20) des Funkenerosionsprofils berücksichtigt werden,
- ausgehend von $V_1$ - $V_2$ und einer zugehörigen Eichkurve die Konzentration $[M]_p$ im niedergeschlagenen Zustand des zu analysierenden Elements M bestimmt wird,
- ausgehend von $V_2$ und einer zugehörigen Eichkurve die Konzentration im gelösten Zustand $[M]_d$ des zu analysierenden Elements bestimmt wird und
- die Gesamtkonzentration $[M]$ des zu analysierenden Elements aus der Summe der Konzentrationen im gelösten Zustand und im niedergeschlagenen Zustand $[M]_b + [M]_p$ bestimmt wird.

2. Verfahren nach Anspruch 1, dadurch gekennzeichnet, daß die normalisierten Werte die arithmetischen Mittel der aufeinanderfolgenden Intensitäten der verschiedenen betrachteten Abschnitte des Funkenerosionsprofils sind.

3. Verfahren nach einem der Ansprüche 1 oder 2, dadurch gekennzeichnet, daß das Funkenerosionsprofil in drei aufeinanderfolgende Abschnitte unterteilt wird: die Signalspitze (19) am Beginn, der Absatz (20) am Ende und einen dazwischenliegenden Abschnitt, der dem Übergang vom Ende der Signalspitze zum Beginn des Absatzes entspricht.

4. Verfahren nach Anspruch 3, dadurch gekennzeichnet, daß die drei Abschnitte des Funkenerosionsprofils durch Zeitintervalle bestimmt sind, die ungefähr 0 bis 10 sec bzw. 10 bis 30 sec und jenseits von 30 sec bis zum Ende der Analysendauer betragen.

5. Verfahren nach einem der vorhergehenden Ansprüche, dadurch gekennzeichnet, daß die Analysedauer ungefähr 40 sec beträgt.

6. Verfahren nach einem der vorhergehenden Ansprüche, dadurch gekennzeichnet, daß im Hinblick auf die Ausbildung ausreichend schwacher Anregungsbedingungen ein Funkenerosionsgenerator (3) verwendet wird, der einen elektrischen Kondensator mit einer sehr geringen Kapazität von weniger als 4 μF aufweist, vorzugsweise gleich 3 μF.

7. Optisches Emissionsspektrometer insbesondere ausgelegt zur Ausführung des Verfahrens nach einem der vorhergeheden Ansprüche und der einen Funkenerosionsgenerator (3) aufweist, der mit einem elektrischen Kondensator geringer Kapazität versehen ist und mit einem Meßkreis (6-14) für die Spektrallinie des zu analysierenden Elements, der mit einer Meß- und Verarbeitungsanordnung (2) verbunden ist, wobei die Kapazität des Kondensators kleiner als 4 μ F und vorzugsweise gleich 3 μ F ist.

## Claims

1. A process for determining the dissolved and precipitated concentrations of an element, such as aluminum, in a metallic analysis sample by Optical Emission Spectrometry, in particular a steel sample, comprising the steps of
- submitting the sample to mild spark erosion conditions for the entire duration of the analysis in such a way as to avoid any phenomenon of local refusion of the sample, and sufficiently mild so as not to draw out the subcutaneous inclusions of the precipitated element,
- dividing the spark erosion profile in time, that is thus obtained for the element under analysis, in at least two successive parts: an initial part formed by a peak (19) and a terminal part formed by a horizontal flat portion (20),
- considering the standardized values of the intensities of the spark erosion profile,
- determining said concentrations on the basis of said standardized values by reading on calibrating charts set on known samples,
- considering a standardized value $V_1$ of the intensity of the peak (19) of the spark erosion profile and a value $V_2$ of the intensity of the horizontal flat portion (20) of the spark erosion profile,

- determining on the basis of $V_1-V_2$ and a corresponding calibrating chart the concentration $[M]_p$ in the precipitated state of the element M under analysis,

- determining on the basis of $V_2$ and a corresponding calibrating chart the concentration in the dissolved state $[M]_d$ of the element under analysis,

- determining the total concentration $[M]_t$ of the element under analysis by the sum of the concentrations in the dissolved state and the precipitated state $[M]_d + ]M]_p$.

2. A process according to claim 1, characterized in that the standardized values are the arithmetic averages of the constitutive intensities of the various parts considered of the spark erosion profile.

3. A process according to either of claims 1 and 2, characterized in that the spark erosion profile is divided into three successive parts: the initial peak (19), the final flat portion (20), and an intermediate part corresponding to the transition between the end of the peak and the beginning of the flat portion.

4. A process according to claim 3, characterized in that the three parts of the spark erosion profile are defined by the respective time intervals of approximately 0 to 10 seconds, 10 to 30 seconds and more than 30 seconds until the end of the analysis period.

5. A process according to any of the above claims, characterized in that the duration of the analysis is approximately 40 seconds.

6. A process according to any of the above claims, characterized in that, in order to realize sufficiently mild excitation conditions, a spark erosion generator 3 is used that is equipped with an electrical capacitor having a very weak capacitance lower than 4 µF, and preferably substantially equal to 3 µF.

7. An Optical Emission Spectrometry apparatus specially designed for performing the process according to any of the above claims, of the type comprising a spark erosion generator (3) equipped with a low-capacitance electrical capacitor, and a circuit (6-14) for detecting the line of the element under analysis connected to a measuring and treating system (2), the capacitance of said capacitor being lower than 4 µF, and preferably substantially equal to 3 µF.

$$\frac{(V_1^i - V_2^i)}{[Al]^i} \quad \frac{V_2^i}{[Al]_e^i}$$

$V_1 - V_2$

$V_2$

$[Al]_i \ \%$

$[Al]_e \ \%$

$[Al]_p \ \%$